**Europäisches Patentamt**

**European Patent Office**

**Office européen des brevets**

(11) Veröffentlichungsnummer: **0 245 672**

**A1**

# (12) EUROPÄISCHE PATENTANMELDUNG

(21) Anmeldenummer: **87105691.7**

(22) Anmeldetag: **16.04.87**

(51) Int. Cl.³: **F 16 D 65/02**
**F 16 D 69/04**

(30) Priorität: **14.05.86 DE 3616306**

(43) Veröffentlichungstag der Anmeldung:
**19.11.87 Patentblatt 87/47**

(84) Benannte Vertragsstaaten:
**DE FR GB IT NL**

(71) Anmelder: **Xaver Fendt & Co.**
**Postfach 140 Johann-Georg-Fendt-Strasse 4**
**D-8952 Marktoberdorf(DE)**

(72) Erfinder: **Marschall, Hans**
**Haydnstrasse 9**
**D-8952 Marktoberdorf(DE)**

(54) **Reibbelag-Scheibenbremse.**

(57) Beschrieben ist eine Reibbelag-Scheibenbremse mit einem in einem Bremsgehäuse (1,15) axial zur abzubremsenden Welle (2,16) verschiebbaren Druckring(5), einer mit der Welle (2) drehfest verbundenen Hauptbremsscheibe (3,13) und ggfs. mindestens einer neben der Hauptbremsscheibe (3,13) koaxial zur Welle gelagerten Zwischenscheibe (14), wobei der Reibbelag radial zur Welle durch eine seitliche Öffnung (1c, 15c) aus dem Bremsgehäuse (1,15) entnehmbar ist. Die Öffnung mußte bisher relativ groß gehalten werden, weil der Reibbelag nur gemeinsam mit dem ihn tragenden Ring aus dem Bremsgehäuse entfernt werden konnte. Auch war dies nur dann möglich, wenn die Welle aus dem Bremsgehäuse herausgezogen wurde. Um den Umfang von Montagearbeiten anläblich des Auswechselns verschlissener Reibbeläge möglichst gering zu halten und das Bremsgehäuse durch die Öffnung möglichst wenig zu schwächen, wird vorgeschlagen, daß der Reibbelag von einer drehbar gelagerten Belagträgerscheibe (3a, 14) getragen ist und aus mehreren Reibbelagsegmenten (7,12) besteht, die im wesentlichen radial zur Welle (2,16) abnehmbar befestigt sind.

Fig. 1

EP 0 245 672 A1

# FENDT

0245672

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1431

- |-

## Reibbelag-Scheibenbremse

Die Erfindung betrifft eine Reibbelag-Scheibenbremse mit einem
in einem Bremsgehäuse axial zu einer abzubremsenden Welle verschiebbaren Druckring, einer mit der Welle drehfest verbundenen
Hauptbremsscheibe und ggfs. mindestens einer neben der Hauptbremsscheibe koaxial zur Welle gelagerten Zwischenscheibe, wobei der Reibbelag radial zur Welle durch eine seitliche Öffnung
aus dem Bremsgehäuse entnehmbar ist.

Vor allem im Nutzfahrzeugbau werden Scheibenbremsen der eingangs beschriebenen Art nahe den Rädern oder nahe des Achsdifferentials in einem Achstrichter untergebracht, wo jedoch
die Reibbeläge praktisch unzugänglich sind. Zum Auswechseln
verschlissener Reibbeläge ist daher der gesamte Achsantrieb
auseinanderzubauen, was mit einem sehr hohen Montageaufwand
verbunden ist und somit einen längeren Werkstattaufenthalt
bedeutet. Dieser Nachteil wirkt sich insbesondere bei trockenen
Scheibenbremsen besonders kraß aus, da wegen des besonders
starken Reibbelagverschleißes die Werkstatt relativ oft in Anspruch genommen werden muß. Um den Verschleiß der Reibbeläge
zu verringern, kommen Scheibenbremsen mit dem angegebenen Aufbau auch naßlaufend zum Einsatz, jedoch haben diese normalerweise ein Restmoment zur Folge, welches aus dem Kleben des
Reibbelages an den Bremsscheiben und dem Scherwiderstand des
Öles im Reibflächenspalt resultiert, oder sie sind mit zusätzlichen Einrichtungen zu versehen, mit denen das Kleben dieser
Bremsteile aneinander reduziert bzw. unterbunden werden kann.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1431

- 2 -

In der DE-OS 22 43 364 ist eine Anordnung für eine Bremse der oben wiedergegebenen Bauart beschrieben, welche eine leichte Zugänglichkeit des Reibbelages dadurch sicherstellt, daß die Bremsscheiben quer zur abzubremsenden Welle durch eine seitliche Öffnung aus dem Bremsgehäuse entfernt werden können. Dazu ist allerdings zuvor die Welle aus dem Bereich der Bremsscheiben der Bremse wegzuziehen. Somit ist der Montageaufwand für ein Auswechseln der Reibbeläge immer noch beträchtlich. Auch muß die Höhe der Öffnung im Bremsgehäuse mindestens dem Durchmesser der Bremsscheiben entsprechen, was mit einer bedeutenden Schwächung des ganzen Achsaufbaus einhergeht.

Ausgehend von dem aufgezeigten Stand der Technik besteht die Aufgabe der Erfindung darin, eine Reibbelag-Scheibenbremse der eingangs beschriebenen Art so auszubilden, daß der Reibbelag jederzeit gut zugänglich ist und ausgewechselt werden kann, ohne irgendwelche für den Antrieb wesentliche Bauteile demontieren zu müssen.

Zur Lösung dieser Aufgabe wird vorgeschlagen, daß der Reibbelag von einer drehbar gelagerten Belagträgerscheibe (Hauptbremsscheibe, Zwischenscheibe) getragen ist und aus mehreren Reibbelagsegmenten besteht, die im wesentlichen radial zur Welle abnehmbar befestigt sind.

Die erfindungsgemäße Lehre ermöglicht es, die Reibbelagsegmente in einfachster Weise durch die seitliche Öffnung im Bremsgehäuse auszuwechseln, ohne andere Bremsteile ausbauen oder Fahrzeugteile demontieren zu müssen. In Anpassung an die nunmehr

**XAVER FENDT & CO.**

MASCHINEN- UND SCHLEPPERFABRIK

**8952 MARKTOBERDORF**

Johann-Georg-Fendt-Straße 4

ANR: 1 001 523

Fe 1431

-3-

gegenüber dem Durchmesser der sie tragenden Scheibe wesentlich
kleineren Reibbelagsegmente kann auch die Öffnung wesentlich
kleiner ausgebildet und so bei im übrigen gleicher Achsausführung ein erheblicher Festigkeitsgewinn erzielt werden. Das Auswechseln der Reibbelagsegmente stellt sich nunmehr so einfach
dar, daß es nicht mehr erforderlich ist, hierfür eine Werkstatt
aufzusuchen. Vielmehr kann diese Arbeit selbst von nicht speziell
ausgebildeten Personen ausgeführt werden. Die gefundene unerwartet einfache Lösung ist in ihrer Anwendung auch nicht auf
Reibbelag-Scheibenbremsen beschränkt. Die erfinderische Lehre
ist vielmehr mit demselben Erfolg auch bei entsprechend aufgebauten Kupplungen anwendbar und es wird Schutz auch für eine
solche Anwendung begehrt.

Weitere vorteilhafte Einzelheiten und Merkmale der Erfindung
gehen aus den Unteransprüchen hervor.

Die Erfindung wird im folgenden anhand einer Zeichnung näher
erläutert. Es zeigt:

Fig. 1    Ein erstes Ausführungsbeispiel einer Scheibenbremse in einem Längsschnitt,

Fig. 2    eine Schnittansicht der Scheibenbremse gemäß

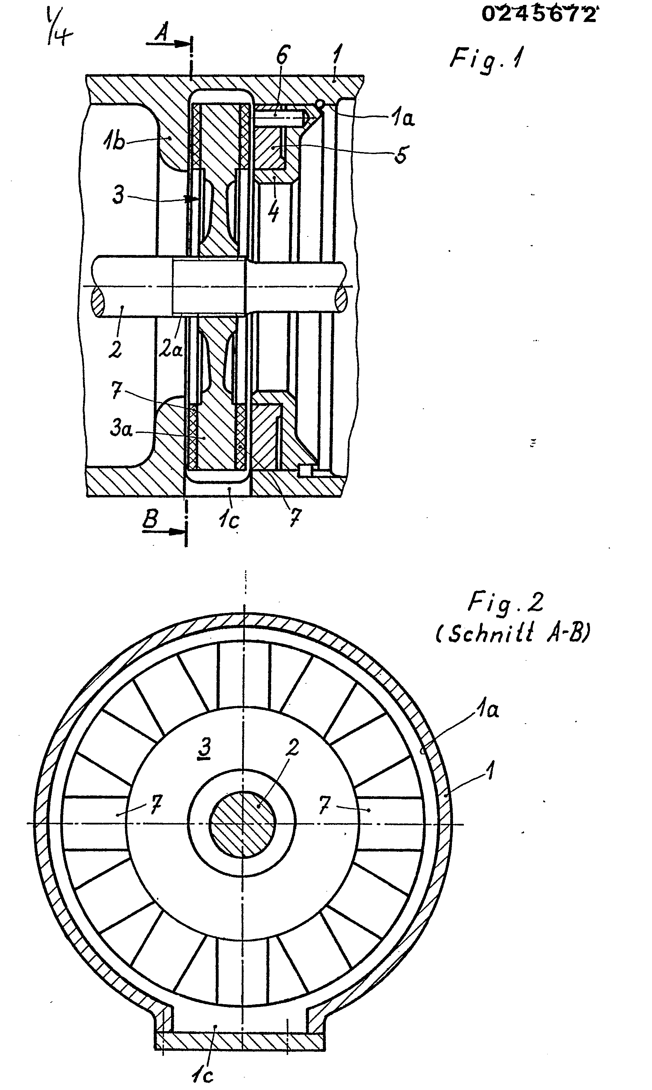

          Fig. 1 nach der Linie A-B,

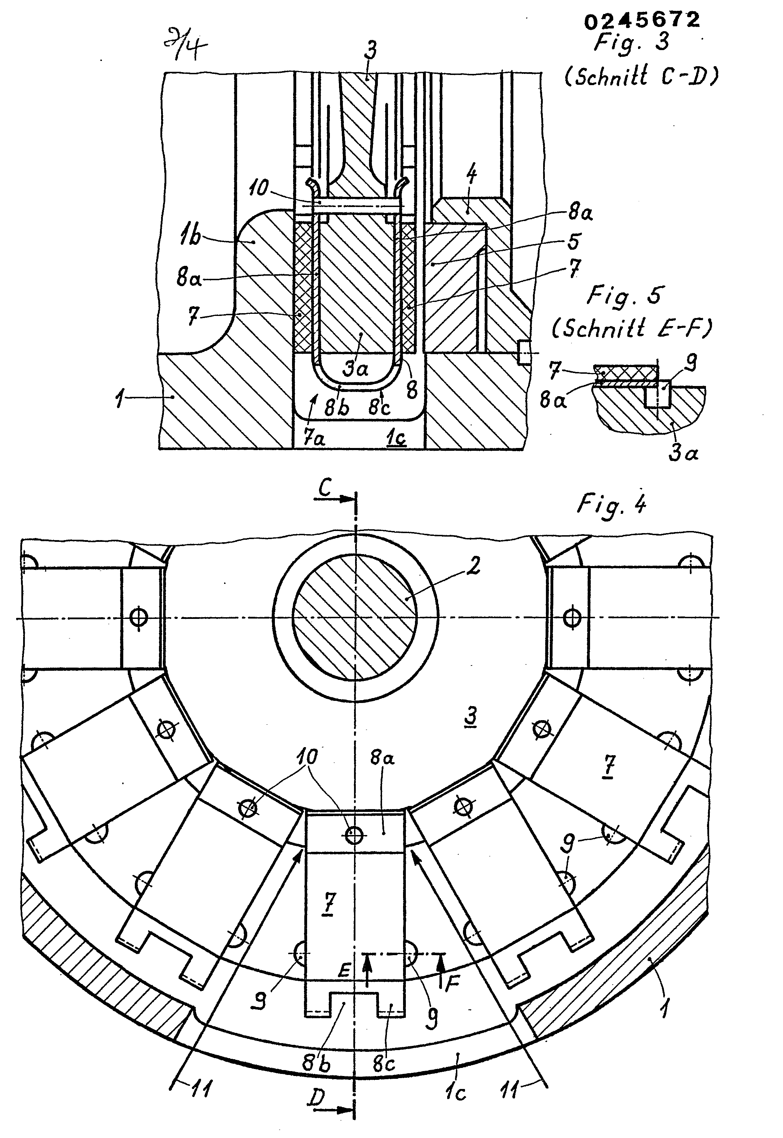

Fig. 3    die Anordnung und Befestigung der Reibbelagsegmente der Scheibenbremse gemäß Fig. 1 nach
          der Linie C-D in Fig. 4,

Fig. 4    eine Teilansicht entsprechend Fig. 2 in einem
          größeren Maßstab,

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1431

- 4 -

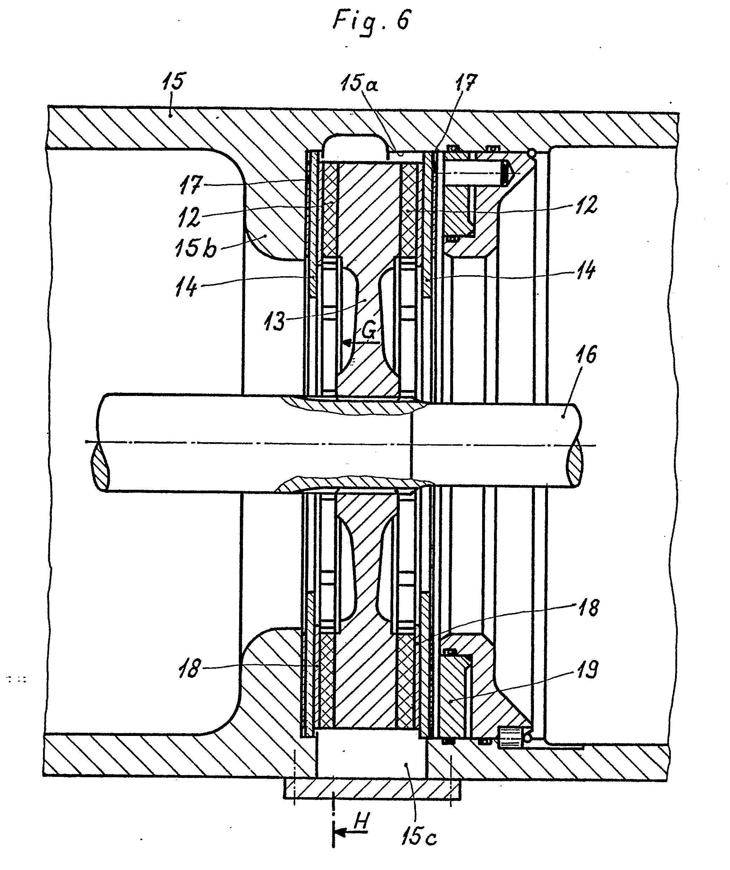

Fig. 5    eine Detailansicht nach der Linie E-F in
          Fig. 4,

Fig. 6    ein zweites Ausführungsbeispiel einer Scheibenbremse in einer Schnittansicht,

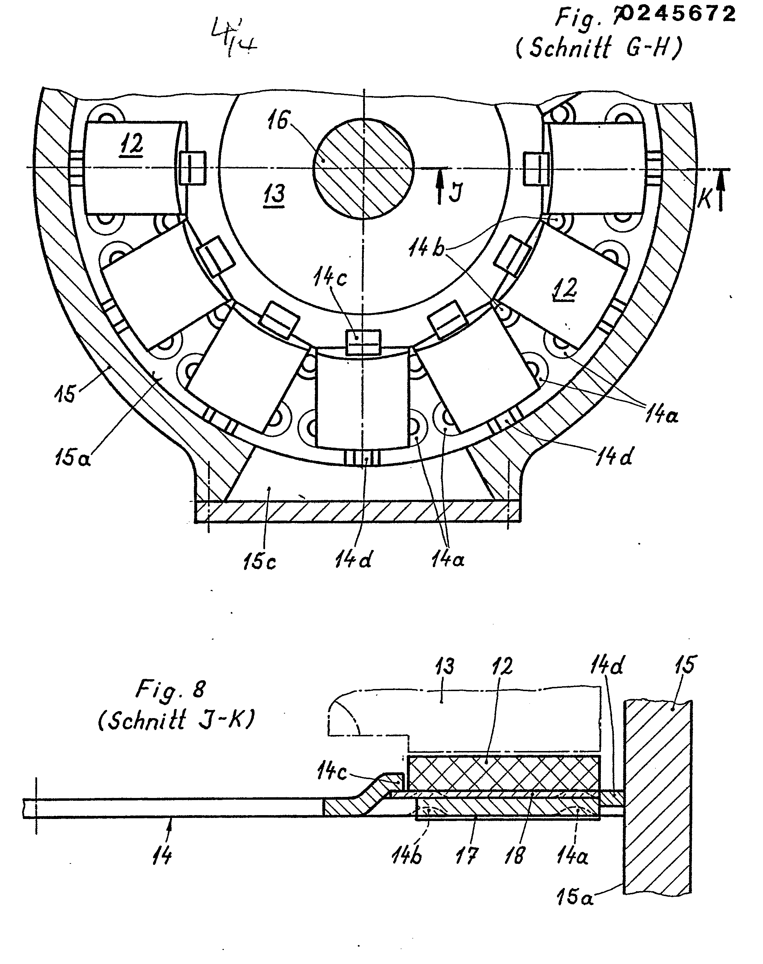

Fig. 7    eine Schnittansicht der Scheibenbremse gemäß Fig. 6 nach der Linie G-H und

Fig. 8    eine Schnittansicht der Befestigung der
          Reibbelagsegmente nach der Linie I-K in
          Fig. 7.

Ein erstes Ausführungsbeispiel einer trockenen Reibbelag-Scheibenbremse ist in den Fig. 1 bis 5 gezeigt. Das Bremsgehäuse 1
kann beispielsweise einen Teil eines Achsgehäuses bilden, in
dem die abzubremsende Welle 2 in nicht gezeigter Weise gelagert
ist. Die Welle 2 besitzt eine Keilverzahnung 2a, auf der eine
Hauptbremsscheibe 3 drehfest aber axial verschiebbar angeordnet
ist. Die Hauptbremsscheibe 3 ist der Verbesserung des Reibungswärmespeichervermögens wegen relativ breit gebaut. Grundsätzlich kann jedoch die Erfindung auch bei sogenannten nassen
Bremsen verwendet werden, bei denen dann die ölgekühlte Hauptbremsscheibe wesentlich schmaler gehalten ist. Ein äußerer Kranz
3a der Hauptbremsscheibe 3 trägt an beiden Stirnseiten einen
Reibbelag, der im einzelnen unten beschrieben ist.

Zur Erzeugung der Bremskraft ist in einer Bohrung 1a des Bremsgehäuses 1 ein in axialer Richtung festgelegter und gegen Verdrehen gesicherter Bremszylinder 4 vorgesehen, in dem ein als
hydraulisch beaufschlagbarer Kolben ausgebildeter Druckring 5
verschiebbar ist. Dieser ist mittels Führungsbolzen 6 gegenüber
dem Bremszylinder 4 unverdrehbar geführt und wirkt beim Bremsen

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1431

- -5 -

mit dem Reibbelag der einen Seite der Hauptbremsscheibe 3 zusammen. Der Reibbelag an der anderen Stirnseite der Hauptbremsscheibe 3 stützt sich beim Bremsen an einem Flansch 1b des
Bremsgehäuses 1 ab.

Der Reibbelag auf beiden Seiten der Hauptbremsscheibe 3 besteht aus mehreren Reibbelagsegmenten 7, die in ihrer seitlichen Kontur weitgehend beliebig geformt sein können, im vorliegenden Ausführungsbeispiel jedoch rechteckig sind. Die Reibbelagsegmente 7 sind in der Weise auf der Hauptbremsscheibe 3
angeordnet, daß jeweils zwischen zwei benachbarten Reibbelagsegmenten 7 ein genügend großer Abstand herrscht, der in ansich bekannter Weise die unverzügliche Entfernung des beim Bremsen entstehenden Abriebs aus dem Wirkungsbereich der Reibbelagsegmente 7 sicherstellt und die Kühlfläche der Bremse vergrößert.

Die Befestigung der Reibbelagsegmente 7 an der Hauptbremsscheibe
3 geht aus den Fig. 3 bis 5 hervor, wobei die hier beschriebene
Lösung aus der relativ großen Breite der Hauptbremsscheibe 3
resultiert. Da die Hauptbremsscheibe 3 auf beiden Stirnseiten
Reibbelagsegmente 7 trägt, ist jeweils ein Reibbelagsegment der
einen und der anderen Stirnseite zu einer Reibbelagsegment-Einheit 7a zusammengefaßt, die sich in besonders einfacher Weise
an der Hauptbremsscheibe 3 anbringen und gegen Fortschleudern
sichern läßt. Dazu sind die betreffenden Reibbelagsegmente 7
in Richtung der Welle 2 axial genau hintereinander angeordnet
und außen auf die Schenkel 8a eines U-förmigen Reibbelagträgers
8 geklebt, dessen lichte Weite der Breite der Hauptbremsscheibe
3 entspricht. Die beiden Schenkel 8a sind über einen mit einer
Ausnehmung 8b versehenen Steg 8c federnd miteinander verbunden.

XAVER FENDT & CO.
MASCHINEN- UND SCHLEPPERFABRIK

8952 MARKTOBERDORF
Johann-Georg-Fendt-Straße 4

ANR: 1 001 523
Fe 1431

- 6 -

Für jede vorhandene Reibbelagsegment-Einheit 7a besitzt die Hauptbremsscheibe 3 einen formschlüssig wirkenden Sitz, in den und aus dem die Reibsegment-Einheit 7a schnell und einfach eingesetzt bzw. entnommen werden kann.

Jeder Sitz weist im äußeren Randbereich des Kranzes 3a zwei in Umfangsrichtung versetzte, eine kurze Führung bildende Bolzen 9 auf, deren Abstand voneinander der Breite der Reibbelagträger 8 zuzüglich eines geringen Spiels entspricht, und die jeweils einen Schenkel 8a zwischen sich aufnehmen. Damit der Reibbelag vollständig ausgenutzt werden kann, ragen die Bolzen 9 lediglich um ein der Dicke der Schenkel 8a entsprechendes Maß aus dem Kranz 3a hervor. Zur Sicherung der Reibbelagsegment-Einheiten 7a gegen Fortschleudern von der sich drehenden Welle 2 sind die Schenkel 8a über den inneren Randbereich der Reibbelagsegmente 7 hinaus verlängert und weisen dort eine Bohrung auf, in die bei ordnungsgemäß aufgeschobener Reibbelagsegment-Einheit 7a ein entsprechend weit aus der Kontur der Hauptbremsscheibe 3 herausragender Bolzen 10 eingreift. Zur Erleichterung der Montage der Reibbelagsegment-Einheiten 7a sind die Schenkel 8a im vorderen Bereich aufgebogen, so daß der Reibbelagträger 8 beim Auftreffen der Schenkel 8a auf den Bolzen 10 federnd aufgeweitet wird, bis der Bolzen 10 bei Erreichen der ordnungsgemäßen Position in die Bohrung schnappt.

Um verschlissene Reibbelagsegmente 7a schnell und ohne großen Aufwand von ihrem Sitz abziehen zu können, ist der Bereich

**XAVER FENDT & CO.**

MASCHINEN- UND SCHLEPPERFABRIK

**8952 MARKTOBERDORF**

Johann-Georg-Fendt-Straße 4

ANR: 1 001 523

Fe 1431

- 7 -

der Hauptbremsscheibe 3, aus der der Bolzen 10 hervorragt, gegenüber den Schenkeln 8a um einiges zurückgesetzt. So ist es später bei vollständig gelüfteter Bremse und zurückgeschobenem Druckring 5 mit Hilfe eines in Richtung des Pfeils 11 in Fig. 4 geführten Schraubendrehers oder dergleichen Spreizwerkzeug möglich, nahe dem Bolzen 10 unter den Schenkel 8a zu fahren und durch eine einfache Hebel- und/oder Drehbewegung die Schenkel 8a vom Bolzen 10 abzuheben. Anschließend kann mit Hilfe eines geeignet geformten Werkzeuges, welches hinter den Steg 8c greift, die Reibbelagsegment-Einheit 7a radial zur Welle 2 von ihrem Sitz abgezogen und durch die Öffnung 1c im Bremsgehäuse 1 entnommen sowie eine neue Reibbelagsegment-Einheit 7a eingesetzt werden. In gleicher Weise sind auch die übrigen Reibbelagsegment-Einheiten 7a austauschbar, wozu sie zuvor durch entsprechendes Verdrehen der Welle 2 in eine geeignete Position zur Öffnung 1c gebracht werden müssen.

Ein zweites Ausführungsbeispiel einer ebenfalls trockenen Reibbelag-Scheibenbremse ist in den Fig. 6 bis 8 beschrieben. Bei dieser Bremse sind die Reibbelagsegmente 12 nicht auf der Hauptbremsscheibe 13, sondern an Zwischenscheiben 14 angeordnet, die rechts und links von der Hauptbremsscheibe 13 frei drehbar angeordnet und an ihrem Außenumfang durch die Innenwand 15a einer entsprechend gearbeiteten Bohrung des Bremsgehäuses 15 gleichachsig zur Welle 16 geführt sind.

Zur lösbaren Befestigung der Reibbelagsegmente 12 sind an der zur Hauptbremsscheibe 13 weisenden Fläche einer jeden Zwischenscheibe 14 leicht aufhebbaren Formschluß bietende Sitze vorgesehen, während die andere Seite der Zwischenscheibe 14 mit einem

# FENDT

0245672

**XAVER FENDT & CO.**

**MASCHINEN- UND SCHLEPPERFABRIK**

**8952 MARKTOBERDORF**

Johann-Georg-Fendt-Straße 4

ANR: 1 001 523

Fe 1431

- 8 -

Reibbelagpapier 17 beklebt ist. Dieser Reibbelag wirkt mit dem Flansch 15b des Bremsgehäuses 15 zusammen und besitzt bei gleichem Wirkdurchmesser einen wesentlich höheren Reibbeiwert als die Reibbelagsegmente 12, damit sich die Zwischenscheibe 14 trotz des bei Bremsbetrieb auftretenden Bremsmomentes gegenüber dem Bremsgehäuse 15 nicht verdreht.

Der Sitz für die Reibbelagsegmente 12 ist aus zwei Noppen 14a und zwei Noppen 14b gebildet, wobei letztere Noppen 14b gleichzeitig als Sitz für das jeweils benachbarte Reibbelagsegment 12 dienen. Diese Noppen 14a, 14b dienen zur Führung der Reibbelagsegmente 12 in Umfangsrichtung der Zwischenscheibe 14 und sind deshalb bezüglich ihres gegenseitigen Abstandes genau an die Breite der Reibbelagsegmente 12 angepaßt. Radial zur Welle 16 hin sind die Reibbelagsegmente 12 durch eine weitere, den nach innen verlängerten Reibbelagträger 18 der Reibbelagsegmente 12 übergreifende Noppe 14c und radial von der Welle 16 weg durch eine Noppe 14d fixiert. Bis auf die Noppe 14c sind alle anderen Noppen 14a - 14d nur so weit aus dem Material der Zwischenscheibe 14 ausgeformt, daß der Reibbelagträger 18 daran zur Anlage kommt.

Der Austausch verschlissener Reibbelagsegmente 12 erfolgt im wesentlichen in der gleichen Weise wie bei dem erstbeschriebenen Ausführungsbeispiel einer Bremse. Noch einfacher als dort sind aber die Reibbelagsegmente 12 aus ihrem Sitz zu entnehmen, indem sie bei zurückgeschobenem Druckring 19 lediglich über die Noppe 14d zu heben sind um anschließend radial zur Welle 16 durch die Öffnung 15c entnommen werden zu können. Wegen der freien Drehbarkeit der Zwischenscheibe 14 gestaltet sich ferner auch die Positionierung des freizumachenden und wiederzubelegenden Sitzes gegenüber dem erstbeschriebenen Ausführungsbeispiel als unwesentlich einfacher.

# FENDT

0245672

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1431
sa - fl
06.05.86

P A T E N T A N S P R Ü C H E

1. Reibbelag-Scheibenbremse mit einem in einem Bremsgehäuse axial zur abzubremsenden Welle verschiebbaren Druckring, einer mit der Welle drehfest verbundenen Hauptbremsscheibe und ggfs. mindestens einer neben der Hauptbremsscheibe koaxial zur Welle gelagerten Zwischenscheibe, wobei der Reibbelag radial zur Welle durch eine seitliche Öffnung aus dem Bremsgehäuse entnehmbar ist,
   d a d u r c h   g e k e n n z e i c h n e t ,
   daß der Reibbelag von einer drehbar gelagerten Belagträgerscheibe (Hauptbremsscheibe (3,13); Zwischenscheibe (14)) getragen ist und aus mehreren Reibbelagsegmenten (7,12) besteht, die im wesentlichen radial zur Welle (2,16) abnehmbar befestigt sind.

2. Reibbelag-Scheibenbremse nach Anspruch 1,
   d a d u r c h   g e k e n n z e i c h n e t ,
   daß die Reibbelagsegmente (7,12) in je einem Sitz mit aufhebbarem Formschluß gehalten sind.

3. Reibbelag-Scheibenbremse nach den Ansprüchen 1 und 2,
   d a d u r c h   g e k e n n z e i c h n e t ,
   daß die Reibbelagsegmente (7,12) über ihre gesamte radiale Erstreckung einen Abstand voneinander aufweisen.

---

**XAVER FENDT & CO.**

**MASCHINEN- UND SCHLEPPERFABRIK**

**8952 MARKTOBERDORF**

Johann-Georg-Fendt-Straße 4

ANR: 1 001 523

Fe 1431

- 2 -

4. Reibbelag-Scheibenbremse nach den Ansprüchen 1 bis 3,
   d a d u r c h   g e k e n n z e i c h n e t ,
   daß der Sitz der Reibbelagsegmente (7,12) durch mehrere
   parallel zur Welle (2,16) verlaufende, im Vergleich zur
   Stärke der Reibbelagsegmente (7,12) nur wenig aus der Belagträgerscheibe herausragende, den Formschluß herstellende
   Mittel (Bolzen (9), Noppe (14a - 14d)) gebildet ist und die
   Mittel in Umfangsrichtung paßgenauen Abstand voneinander aufweisen.

5. Reibbelag-Scheibenbremse nach den Ansprüchen 1 bis 4,
   d a d u r c h   g e k e n n z e i c h n e t ,
   daß die Reibbelagsegmente (7) auf beiden Seiten der Hauptbremsscheibe (3) angeordnet sind und daß jedem Reibbelagsegment (7) auf der einen Seite der Hauptbremsscheibe (3)
   ein Reibbelagsegment (7) auf der anderen Seite gegenüberliegt.

6. Reibbelag-Scheibenbremse nach Anspruch 5,
   d a d u r c h   g e k e n n z e i c h n e t ,
   daß jeweils zwei gegenüberliegende Reibbelagsegmente (7)
   eine vorzugsweise über die sie tragenden Reibbelagträger
   (8) verbundene Einheit (7a) bilden.

7. Reibbelag-Scheibenbremse nach Anspruch 6,
   g e k e n n z e i c h n e t   durch eine federnde Verbindung
   der Reibbelagträger (8).

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1431

- 3 -

8. Reibbelag-Scheibenbremse nach den Ansprüchen 6 und 7,
   d a d u r c h   g e k e n n z e i c h n e t ,
   daß die beiden gegenüberliegenden Reibbelagsegmente (7)
   in Art einer Klammer außerhalb der Peripherie der Hauptbremsscheibe (3) miteinander verbunden sind.

9. Reibbelag-Scheibenbremse nach den Ansprüchen 6 bis 8,
   d a d u r c h   g e k e n n z e i c h n e t ,
   daß für jede Reibbelagsegment-Einheit (7a) zumindest auf
   einer Seite der Hauptbremsscheibe (3) ein Bereich (Bolzen
   (10)) erhaben ausgebildet ist, der bei bestimmungsgemäßer
   Anordnung der Reibbelagsegment-Einheit (7a) in eine bezüglich Lage, Form und Größe passende Ausnehmung eines der
   oder beider Reibbelagsegmente (Reibbelagträger (8)) eingreift.

10. Reibbelag-Scheibenbremse nach den Ansprüchen 6 bis 9,
    d a d u r c h   g e k e n n z e i c h n e t ,
    daß zumindest in der Nähe des erhabenen Bereiches (Bolzen
    (10)) und zumindest an einer der dem benachbarten Reibbelagsegment (7) zugewandten Längsseiten eines jeden Reibbelagsegments (7) zwischen der Hauptbremsscheibe (3) und dem
    Reibbelagträger (8) eine Aussparung vorgesehen ist.

11. Reibbelag-Scheibenbremse nach den Ansprüchen 1 bis 4, mit
    zwei die Hauptbremsscheibe zwischen sich aufnehmenden
    Zwischenscheiben,
    d a d u r c h   g e k e n n z e i c h n e t ,
    daß die Reibbelagsegmente (12) an der der Hauptbremsscheibe
    (13) zugewandten Seite der Zwischenscheibe (14) angeordnet
    sind und die von der Hauptbremsscheibe (13) abgewandte Seite

**XAVER FENDT & CO.**

MASCHINEN- UND SCHLEPPERFABRIK

**8952 MARKTOBERDORF**

Johann-Georg-Fendt-Straße 4

ANR: 1 001 523

Fe 1431

- 4 -

der Zwischenscheibe (14) so ausgebildet ist, daß die Bremswirkung an der mit dem Druckring (19) zusammenwirkenden bzw. sich am Bremsgehäuse (15) abstützenden Fläche größer ist als die Bremswirkung der mit der Hauptbremsscheibe (13) zusammenwirkenden Reibbelagsegmente (12).

12. Reibbelag-Scheibenbremse nach Anspruch 11,
    d a d u r c h   g e k e n n z e i c h n e t ,
    daß die Zwischenscheiben (14) beidseitig mit Reibbelägen belegt sind, wobei der mit dem Druckring (19) zusammenwirkende und der sich am Bremsgehäuse (15) abstützende Reibbelag ringförmig z. B. durch Metallspritzen oder durch Aufkleben eines Reibbelagpapiers (17) aufgebracht ist.

13. Reibbelag-Scheibenbremse nach den Ansprüchen 11 und 12,
    d a d u r c h   g e k e n n z e i c h n e t ,
    daß die Zwischenscheibe (14) durch die Innenwand (15a) einer Bohrung des Bremsgehäuses (15) zur Welle (16) zentriert ist.

14. Reibbelag-Scheibenbremse nach den Ansprüchen 11 bis 13,
    d a d u r c h   g e k e n n z e i c h n e t ,
    daß der Sitz der Reibbelagsegmente (12) durch ausgestanzte Noppen (14a - 14d) an der Zwischenscheibe (14) gebildet ist.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1431

- 5 -

15. Reibbelag-Scheibenkupplung mit einem in einem Kupplungsgehäuse axial zu den zu kuppelnden Wellen verschiebbaren
    Druckglied und einer mit einer der Wellen drehfest ver-
    bundenen, mehrere Reibbelagsegmente tragenden Hauptkupp-
    lungsscheibe,
    d a d u r c h   g e k e n n z e i c h n e t ,
    daß die Reibbelagsegmente im wesentlichen radial zur
    Welle abnehmbar befestigt sind und daß das Kupplungsgehäuse eine seitliche Öffnung aufweist, durch die Reibbelagsegmente aus dem Kupplungsgehäuse entnehmbar sind.

0245672

Fig.1

Fig.2
(Schnitt A-B)

Fe 1431

0245672
Fig. 3
(Schnitt C-D)

Fig. 5
(Schnitt E-F)

Fig. 4

Fe 1431

3/4

*Fig. 6*

Fe 1431

Fig. 7 0245672
(Schnitt G-H)

Fig. 8
(Schnitt J-K)

Fe 1431

Europäisches
Patentamt

**EUROPÄISCHER RECHERCHENBERICHT**

**0245672**
Nummer der Anmeldung

EP 87 10 5691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-B- 480 357 (BBA GROUP)<br>* Figuren 1-4; Seite 9, Zeile 20 - Seite 13, Zeile 20 * | 1-7,15 | F 16 D 65/02<br>F 16 D 69/04 |
| A | | 4,8,9 | |
| | --- | | |
| X | US-A-3 194 347 (HALL)<br>* Spalte 1, Zeilen 20-32 *. | 1-3,15 | |
| | --- | | |
| A | DE-A-3 039 684 (INTERNATIONAL HARVESTER)<br>* Seite 8, Zeilen 1-13 * | 11-13 | |
| | --- | | |
| A | GB-A-1 264 116 (GIRLING)<br>* Seite 2, Zeilen 46-77 * | 9 | |
| | ----- | | **RECHERCHIERTE SACHGEBIETE (Int. Cl.4)**<br><br>F 16 D 55/00<br>F 16 D 65/00<br>F 16 D 69/00 |

Der vorliegende Recherchenbericht wurde für alle Patentansprüche erstellt.

| Recherchenort | Abschlußdatum der Recherche | Prüfer |
|---|---|---|
| BERLIN | 04-08-1987 | STANDRING M A |